# EUROPEAN PATENT APPLICATION

(11) **EP 4 693 503 A1**
(43) Date of publication of application: **11.02.2026**
(21) Application number: 23929526.4
(22) Date of filing: 31.03.2023
(51) Int. Cl.: H01M 4/62

(54) **SECONDARY BATTERY AND ELECTRONIC DEVICE**

(71) Applicant: Ningde Amperex Technology Limited, Ningde, Fujian 352100 (CN)
(72) Inventor: FU, Hongyan, Ningde, Fujian 352100 (CN); SUN, Zhenhe, Ningde, Fujian 352100 (CN)
(74) Representative: Kraus & Lederer PartGmbB
(86) International application number: PCT/CN2023/085785
(87) International publication number: WO 2024/197943

(57) **Abstract**

A secondary battery and an electronic device are provided. The secondary battery includes an electrode assembly and an electrolyte, where the electrode assembly includes a positive electrode plate, a negative electrode plate, and a separator; the separator is disposed between the positive electrode plate and the negative electrode plate; the positive electrode plate includes a positive electrode current collector and a positive electrode active material layer disposed on at least one surface of the positive electrode current collector; the positive electrode active material layer includes a positive electrode active material; the positive electrode active material includes a transition metal element; the transition metal element includes at least one of Co, Ni, Mn, Fe, or V; and the separator includes a base film, where a thickness of the base film is D µm, and 3≤D≤7. The secondary battery includes an electrolyte nitrile-containing additive and a positive electrode nitrile-containing additive, where based on a mass of the electrolyte, a mass percentage of the electrolyte nitrile-containing additive is x%, and based on a mass of the positive electrode active material layer, a mass percentage of the positive electrode nitrile-containing additive is y%; where x+y=z, 0.3≤z≤3.3, 0<x≤2.3, and 0<y≤1.

## Description

### TECHNICAL FIELD

This application relates to the field of electrochemical energy storage technology, and in particular, to a secondary battery and an electronic device.

### BACKGROUND

Secondary batteries (such as lithium-ion batteries) are increasingly trending toward large capacity and high energy density. For current secondary batteries, a separator is an indispensable component, serving to isolate a positive electrode plate and a negative electrode plate to prevent short circuits; however, the separator does not contribute to capacity. Therefore, the separator is developed to become increasingly thinner. A thin separator is an effective measure to enhance the energy density. In addition, the output voltage of secondary batteries is also trending toward higher values to enhance the capacity and energy density.

### SUMMARY

The inventors of this application have found that in systems applied to notebook computers, secondary battery modules are assembled in series and parallel, so there are high requirements for consistency in output voltages and capacities of individual secondary batteries in the secondary battery module. When a secondary battery has a high output voltage and uses a thin separator, the effect of the separator in isolating a positive electrode plate and a negative electrode plate is weakened, leading to self-discharge within the secondary battery. This affects the consistency of the secondary batteries, causing the series voltage difference issue of the secondary battery module during charging and discharging, and reducing the cycling performance of the secondary battery.

An objective of this application is to provide a secondary battery and an electronic device to enhance the energy density of the secondary battery and alleviate the self-discharge issue of the secondary battery during charging and discharging.

It should be noted that in the summary of this application, a lithium-ion battery is used as an example of a secondary battery to explain this application; however, the secondary battery of this application is not limited to the lithium-ion battery. The specific technical solution is as follows:

According to a first aspect of this application, a secondary battery is provided, including an electrode assembly and an electrolyte, where the electrode assembly includes a positive electrode plate, a negative electrode plate, and a separator; the separator is disposed between the positive electrode plate and the negative electrode plate; the positive electrode plate includes a positive electrode current collector and a positive electrode active material layer disposed on at least one surface of the positive electrode current collector; the positive electrode active material layer includes a positive electrode active material; the positive electrode active material includes a transition metal element; the transition metal element includes one or more selected from the group consisting of Co, Ni, Mn, Fe, and V; the separator includes a base film, where a thickness of the base film is D µm, and 3≤D≤7; and the secondary battery includes an electrolyte nitrile-containing additive and a positive electrode nitrile-containing additive, where based on a mass of the electrolyte, a mass percentage of the electrolyte nitrile-containing additive is x%, and based on a mass of the positive electrode active material layer, a mass percentage of the positive electrode nitrile-containing additive is y%; where x+y=z, 0.3≤z≤3.3, 0<x≤2.3, and 0<y≤1.

In this application, the separator with a thin base film is used to enhance the energy density of the secondary battery. In addition, the electrolyte nitrile-containing additive and the positive electrode nitrile-containing additive are used, and the mass percentage of the electrolyte nitrile-containing additive and the mass percentage of the positive electrode nitrile-containing additive are controlled within the above ranges. The electrolyte nitrile-containing additive and the positive electrode nitrile-containing additive synergistically interact with the separator, reducing the dissolution of transition metal ions (for example, Co ions) inside the secondary battery under high voltages and controlling diffusion impedance, thereby alleviating the self-discharge issue of the secondary battery during charging and discharging.

In some embodiments of this application, 1.4≤z≤3.3. This further alleviates the self-discharge issue of the secondary battery during charging and discharging.

In some embodiments of this application, a ratio of the number of carbon atoms to the number of nitrogen atoms in the electrolyte nitrile-containing additive is m₁, and 1≤m₁≤6; and the electrolyte nitrile-containing additive includes one or more selected from the group consisting of malononitrile, succinonitrile, glutaronitrile, adiponitrile, pimelonitrile, suberonitrile, sebaconitrile, 3,3'-oxydipropionitrile, hex-2-enedinitrile, trans-butenedinitrile, 2-pentenedinitrile, methylglutaronitrile, 4-cyanopimelonitrile, (Z)-but-2-enedinitrile, 2,2,3,3-tetrafluorosuccinonitrile, ethylene glycol bis(propionitrile) ether, 1,3,5-pentanetricarbonitrile, 1,3,6-hexanetricarbonitrile, 1,2,6-hexanetricarbonitrile, 1,2,3-tris(2-cyanoethoxy)propane, and 1,1,3,3-propanetetracarbonitrile. Selecting the above types of electrolyte nitrile-containing additives helps alleviate the self-discharge issue of the secondary battery during charging and discharging and provides good room-temperature cycling performance.

In some embodiments of this application, the positive electrode nitrile-containing additive is a nitrile-containing polymer, a ratio of the number of carbon atoms to the number of nitrogen atoms in the positive electrode nitrile-containing additive is m₂, and 3≤m₂≤5; and a weight-average molecular weight of the positive electrode nitrile-containing additive is M_{w}, and 300≤M_{w}≤700000. Controlling the ratio of the number of carbon atoms to the number of nitrogen atoms and weight-average molecular weight of the positive electrode nitrile-containing additive within the above ranges helps alleviate the self-discharge issue of the secondary battery during charging and discharging and can reduce the impact of the addition of the positive electrode nitrile-containing additive on the manufacturing performance of the positive electrode plate.

In some embodiments of this application, the positive electrode nitrile-containing additive includes one or more selected from the group consisting of polyacrylonitrile, polybutenenitrile, and polyisobutenenitrile. Selecting the above types of positive electrode nitrile-containing additives helps alleviate the self-discharge issue of the secondary battery during charging and discharging.

In some embodiments of this application, an output voltage of the secondary battery is greater than or equal to 4.48 V and less than or equal to 4.6 V. Controlling the output voltage of the secondary battery within this range effectively balances energy density performance and self-discharge risk.

In some embodiments of this application, the output voltage of the secondary battery is less than or equal to 4.56 V.

In some embodiments of this application, 0.035D²-0.562D+2.253≤y≤0.027D²-0.482D+2.257. Controlling the relationship between the thickness of the base film and the mass percentage of the positive electrode nitrile-containing additive helps alleviate the self-discharge issue of the secondary battery during charging and discharging.

In some embodiments of this application, a material of the base film includes a polyolefin, and the polyolefin includes at least one of polyethylene or polypropylene.

In some embodiments of this application, the separator further includes an insulating layer disposed on a surface of the base film, and the insulating layer includes inorganic particles and a binder; where the inorganic particles include a one or more selected from the group consisting of alumina, silica, magnesia, titania, hafnia, tin oxide, ceria, nickel oxide, zinc oxide, calcium oxide, zirconia, yttria, silicon carbide, boehmite, aluminum hydroxide, magnesium hydroxide, calcium hydroxide, and barium sulfate; and the binder includes one or more selected from the group consisting of styrene-butadiene rubber, polyacrylic acid, polyvinyl alcohol, polyethylene glycol, polyacrylate, polyvinylidene fluoride, polyvinyl chloride, formaldehyde resin, and nitrile acrylate.

In some embodiments of this application, the base film is a multilayer film structure. This helps hinder the shuttling of transition metal elements between positive and negative electrodes through a layer interface of the multilayer film structure, reducing the risk of self-discharge.

In some embodiments of this application, the positive electrode active material includes one or more selected from the group consisting of lithium cobaltate, lithium nickel cobalt manganate, lithium nickel cobalt aluminate, lithium manganate, lithium iron phosphate, and lithium manganese iron phosphate.

According to a second aspect of this application, an electronic device is provided, including the secondary battery according to any one of the foregoing embodiments. Therefore, the electronic device has good cycling performance.

The beneficial effects of this application are as follows:

This application provides a secondary battery and an electronic device, where the secondary battery includes an electrode assembly and an electrolyte; the electrode assembly includes a positive electrode plate, a negative electrode plate, and a separator; the separator is disposed between the positive electrode plate and the negative electrode plate; the positive electrode plate includes a positive electrode current collector and a positive electrode active material layer disposed on at least one surface of the positive electrode current collector; the positive electrode active material layer includes a positive electrode active material; the positive electrode active material includes a transition metal element; the transition metal element includes one or more selected from the group consisting of Co, Ni, Mn, Fe, and V; and the separator includes a base film, where a thickness of the base film is D µm, and 3≤D≤7; and the secondary battery includes an electrolyte nitrile-containing additive and a positive electrode nitrile-containing additive, where based on a mass of the electrolyte, a mass percentage of the electrolyte nitrile-containing additive is x%, and based on a mass of the positive electrode active material layer, a mass percentage of the positive electrode nitrile-containing additive is y%; where x+y=z, 0.3≤z≤3.3, 0<x≤2.3, and 0<y≤1. Through the above configuration, a secondary battery with high energy density can be obtained, and the self-discharge issue of the secondary battery during charging and discharging can be alleviated.

### DETAILED DESCRIPTION

To make the objectives, technical solutions, and advantages of this application clearer and more comprehensible, the following further describes this application in detail with reference to some embodiments. Apparently, the described embodiments are only some but not all of these embodiments of this application. All other embodiments obtained by persons of ordinary skill in the art based on these embodiments in this application fall within the protection scope of this application.

It should be noted that in some embodiments of this application, a lithium-ion battery is used as an example of a secondary battery to explain this application; however, the secondary battery of this application is not limited to the lithium-ion battery.

The inventors have found through research that when a high output voltage (for example, 4.48 V or higher) and a thin separator (for example, a base film with a thickness of 3 µm to 7 µm) are used to enhance the energy density of a secondary battery, the series voltage difference issue of the secondary battery during charging and discharging is easily caused. Analysis and research indicate that the primary cause is chemical self-discharge. Chemical self-discharge is mainly caused by reversible redox products shuttling between positive and negative electrodes through an electrolyte and a separator. Current analysis indicates that shuttle pairs originate from transition metal elements in a positive electrode active material, for example, Co²⁺/Co³⁺. Cobalt (Co), as the 27th element, typically exists in the forms of Co²⁺ and Co³⁺, with outermost electron configurations of d7 and d6, respectively. Co²⁺ has one more electron in its outermost d orbital than Co³⁺, and this electron can transfer from Co²⁺ to Co³⁺. An excessively long constant-voltage time causes the electrolyte of the secondary battery to include a large number of cobalt ions with different valence states, and electron transfer between the cobalt ions causes electronic conduction. In addition, a higher output voltage of the secondary battery leads to more byproducts inside the secondary battery. A thinner separator leads to a shorter diffusion path for the byproducts in the secondary battery between the positive and negative electrodes. A thicker separator leads to a longer diffusion path, affecting the diffusion impedance of the secondary battery and causing self-discharge inside the secondary battery. As a result, Co dissolution and diffusion impedance are two main factors affecting chemical self-discharge. The presence of chemical self-discharge affects the consistency of the secondary batteries, leading to the series voltage difference issue of a secondary battery module during charging and discharging, and reducing the cycling performance of the secondary battery. In view of this, this application provides a secondary battery and an electronic device.

According to a first aspect of this application, a secondary battery is provided, including an electrode assembly and an electrolyte, where the electrode assembly includes a positive electrode plate, a negative electrode plate, and a separator; the separator is disposed between the positive electrode plate and the negative electrode plate; the positive electrode plate includes a positive electrode current collector and a positive electrode active material layer disposed on at least one surface of the positive electrode current collector; the positive electrode active material layer includes a positive electrode active material; the positive electrode active material includes a transition metal element; the transition metal element includes one or more selected from the group consisting of Co, Ni, Mn, Fe, and V; the separator includes a base film, where a thickness of the base film is D µm, and 3≤D≤7; and the secondary battery includes an electrolyte nitrile-containing additive and a positive electrode nitrile-containing additive, where based on a mass of the electrolyte, a mass percentage of the electrolyte nitrile-containing additive is x%, and based on a mass of the positive electrode active material layer, a mass percentage of the positive electrode nitrile-containing additive is y%; where x+y=z, 0.3≤z≤3.3, 0<x≤2.3, and 0<y≤1. For example, D is 3, 4, 5, 6, 7, or any value within a range defined by any two of these values. A value of z is 0.3, 1, 1.5, 2, 2.5, 3, 3.3, or any value within a range defined by any two of these values. A value of x is 0.01, 0.5, 1.0, 1.5, 2.0, 2.3, or any value within a range defined by any two of these values. A value of y is 0.01, 0.2, 0.4, 0.6, 0.8, 0.9, 1, or any value within a range defined by any two of these values.

The inventors have found through extensive research that when the positive electrode active material includes at least one transition metal element of Co, Ni, Mn, Fe, or V, electron transfer between ions of different valence states of the transition metal elements causes electronic conduction, making the secondary battery prone to self-discharge inside. A higher output voltage of the secondary battery leads to a larger number of transition metal elements dissolved. A thinner base film leads to a smaller volume of the secondary battery, increasing a volumetric energy density of the secondary battery. A shorter diffusion path for the byproducts inside the electrode assembly between the positive and negative electrodes leads to increased chemical self-discharge. A thicker base film leads to a longer diffusion path for the byproducts inside the secondary battery between the positive and negative electrodes, leading to reduced chemical self-discharge. An increased volume of the secondary battery leads to a reduced volumetric energy density of the secondary battery. A nitrile group (-CN) has very high bond energy in a carbon-nitrogen triple bond and is not easily oxidized. In addition, the nitrile group has strong coordination ability and can bind with active sites (for example, the foregoing transition metal ions) on an electrode surface to mask active ions on the electrode surface, reducing electrolyte decomposition by the electrode, thereby suppressing electrolyte decomposition under a high output voltage and a high temperature, and reducing the byproducts. In this application, the high temperature refers to a temperature greater than or equal to 45°C, and the high voltage refers to an output voltage greater than or equal to 4.48 V.

In this application, the separator with a thin base film is used to enhance the energy density of the secondary battery. In addition, the electrolyte nitrile-containing additive and the positive electrode nitrile-containing additive are used. When a total mass percentage z of the electrolyte nitrile-containing additive and the positive electrode nitrile-containing additive is less than 0.3, the mass percentage x% of the electrolyte nitrile-containing additive or the mass percentage y% of the positive electrode nitrile-containing additive is excessively small, resulting in an excessively small number of nitrile groups and limited ability to bind with active sites (for example, the foregoing transition metal ions) on the electrode surface, leading to limited alleviation of chemical self-discharge inside the secondary battery. In addition, the improvement in electrolyte decomposition is limited, and a large number of byproducts are generated after electrolyte decomposition, affecting the performance (for example, cycling performance, storage performance, and safety performance) of the secondary battery. When the total mass percentage z of the electrolyte nitrile-containing additive and the positive electrode nitrile-containing additive is greater than 3.3, the mass percentage x% of the electrolyte nitrile-containing additive or the mass percentage y% of the positive electrode nitrile-containing additive is excessively large. Due to the strong electronegativity of a nitrile functional group, carbon attached to the nitrile functional group typically carries active α-H. An excessively large number of nitrile groups result in excessive free active α-H in the electrolyte, accelerating the consumption of a negative electrode additive (for example, fluoroethylene carbonate), and affecting the room-temperature cycling performance of the secondary battery. In addition, in addition to forming a stable film on the electrode surface, the excessive electrolyte nitrile-containing additive undergoes continuous reaction, leading to the consumption of active lithium and forming an excessively thick interface film, thus affecting the performance of the secondary battery, such as cycling performance and charge rate. The excessive positive electrode nitrile-containing additive affects a cold-pressing compacted density of the positive electrode plate, reducing the energy density of the secondary battery, and causing the issues such as tape breakage or film detachment of the positive electrode plate during cold-pressing, thus rendering the positive electrode plate unusable normally.

The thickness of the separator, the mass percentage of the electrolyte nitrile-containing additive, and the mass percentage of the positive electrode nitrile-containing additive are controlled within the above ranges. The electrolyte nitrile-containing additive and the positive electrode nitrile-containing additive synergistically interact with the separator, reducing the dissolution of transition metal ions (for example, Co ions) inside the secondary battery and controlling diffusion impedance, thereby alleviating the self-discharge issue of the secondary battery during charging and discharging under a high output voltage and a high temperature.

In this application, unless otherwise specified, the electrolyte nitrile-containing additive is added to the electrolyte, the positive electrode nitrile-containing additive is added to the positive electrode active material layer, and the positive electrode nitrile-containing additive is a nitrile-containing polymer.

The "positive electrode active material layer disposed on at least one surface of the positive electrode current collector" refers to a positive electrode active material layer disposed on one surface of the positive electrode current collector or positive electrode active material layers disposed on both surfaces of the positive electrode current collector. The "surface" may be a partial surface or an entire surface of the positive electrode current collector. In some embodiments of this application, another material layer, for example, an adhesive layer, a safety layer, or another active material layer, may also be disposed between the positive electrode active material layer and the positive electrode current collector.

In some embodiments of this application, the secondary battery can be assembled in series and parallel into a secondary battery module. Under a condition that the self-discharge issue of the secondary battery during charging and discharging is alleviated, the consistency in output voltages and capacities of secondary batteries in the secondary battery module can be improved. As a result, the series voltage difference issue of the secondary battery module during charging and discharging is alleviated, and the cycling performance of the secondary battery under high voltages and high temperatures is improved.

This application has no particular limitation on the number of secondary batteries included in a secondary battery module, two or more secondary batteries may be included, and the specific number can be selected by persons skilled in the art based on the application and capacity of the secondary battery module, provided that the objective of this application can be achieved. This application has no particular limitation on the arrangement of secondary batteries in the secondary battery module, provided that the objective of this application can be achieved. For example, multiple secondary batteries may be arranged sequentially along a length direction of the secondary battery module. Certainly, the secondary batteries may alternatively be arranged in other manners.

In some embodiments of this application, 1.4≤z≤3.3. Controlling the total mass percentage z of the electrolyte nitrile-containing additive and the positive electrode nitrile-containing additive within the above range is more conducive to alleviating the self-discharge issue of the secondary battery during charging and discharging.

In some embodiments of this application, a ratio of the number of carbon atoms to the number of nitrogen atoms in the electrolyte nitrile-containing additive is m₁, and 1≤m₁≤6. For example, m₁ is 1, 2, 3, 4, 5, 6, or any value within a range defined by any two of these values. Further, the electrolyte nitrile-containing additive includes one or more selected from the group consisting of malononitrile, succinonitrile, glutaronitrile, adiponitrile, pimelonitrile, suberonitrile, sebaconitrile, 3,3'-oxydipropionitrile, hex-2-enedinitrile, trans-butenedinitrile, 2-pentenedinitrile, methylglutaronitrile, 4-cyanopimelonitrile, (Z)-but-2-enedinitrile, 2,2,3,3-tetrafluorosuccinonitrile, ethylene glycol bis(propionitrile) ether, 1,3,5-pentanetricarbonitrile, 1,3,6-hexanetricarbonitrile, 1,2,6-hexanetricarbonitrile, 1,2,3-tris(2-cyanoethoxy)propane (also referred to as 1,2,3-tris(2-cyanooxy)propane), and 1,1,3,3-propanetetracarbonitrile. The above types of electrolyte nitrile-containing additives have an appropriate ratio of the number of carbon atoms to the number of nitrogen atoms and good stability. Selecting these types of electrolyte nitrile-containing additives facilitates the binding of nitrile groups with active sites on the electrode surface, reducing the dissolution of transition metal ions (for example, Co ions) inside the secondary battery, thereby alleviating the self-discharge issue of the electrode assembly during charging and discharging. As a result, the consistency in output voltages and capacities of the secondary batteries in the secondary battery module is improved, the series voltage difference issue of the secondary battery module during charging and discharging is alleviated, and the cycling performance of the secondary battery under high voltages and high temperatures is improved.

In some embodiments of this application, a ratio of the number of carbon atoms to the number of nitrogen atoms in the positive electrode nitrile-containing additive is m₂, and 3≤m₂≤5; and the weight-average molecular weight of the positive electrode nitrile-containing additive is M_{w}, and 300≤M_{w}≤700000. For example, m₂ is 3, 4, 5, or any value within a range defined by any two of these values. M_{w} is 300, 1000, 10000, 100000, 200000, 300000, 400000, 500000, 600000, 700000, or any value within a range defined by any two of these values. When the ratio of the number of carbon atoms to the number of nitrogen atoms in the positive electrode nitrile-containing additive is within the above range, the positive electrode nitrile-containing additive, with an appropriate number of polar functional groups, is easily dissolved in an organic solvent (for example, N-methylpyrrolidone), facilitating uniform distribution in the positive electrode plate. In addition, the number of transition metal ions interacting with nitrile functional groups is reduced, making it less likely for transition metal ions to undergo side reactions with the electrolyte, thus helping improve the high-temperature performance of the secondary battery. Controlling the ratio of the number of carbon atoms to the number of nitrogen atoms and weight-average molecular weight of the positive electrode nitrile-containing additive within the above ranges reduces the dissolution of the nitrile-containing polymer in the electrolyte and allows the nitrile-containing polymer to be well dissolved in the organic solvent, for example, N-methylpyrrolidone, allowing the nitrile-containing polymer to be mixed well with the positive electrode active material. This facilitates the binding of nitrile groups in the positive electrode nitrile-containing additive with active sites on the electrode surface, reducing the dissolution of transition metal ions (for example, Co ions) inside the secondary battery, decreasing side reactions between the positive electrode active material and the electrolyte, and reducing the number of byproducts generated by the electrolyte. As a result, the self-discharge issue of the secondary battery during charging and discharging is alleviated. As a result, the consistency in the output voltages and capacities of the secondary batteries in the secondary battery module is improved, the series voltage difference issue of the secondary battery module during charging and discharging is alleviated, and the cycling performance of the secondary battery under high voltages and high temperatures is improved.

This application has no particular limitation on the method of controlling the weight-average molecular weight of the positive electrode nitrile-containing additive, provided that the objective of this application can be achieved. For example, the objective of this application can be achieved by directly purchasing positive electrode nitrile-containing additives with different weight-average molecular weights from manufacturers.

In some embodiments of this application, the positive electrode nitrile-containing additive includes one or more selected from the group consisting of polyacrylonitrile (with a molecular formula: (C₃H₃N)ₙ), polybutenenitrile (with a molecular formula: (C₄H₅N)ₙ), and polyisobutenenitrile (with a molecular formula: (C₄H₅N)ₙ). Selecting the above types of positive electrode nitrile-containing additives can further alleviate the self-discharge issue of the secondary battery during charging and discharging. As a result, the consistency in the voltages and capacities of the secondary batteries in the secondary battery module is improved, the series voltage difference issue of the secondary battery module during charging and discharging is alleviated, and the cycling performance of the secondary battery under high voltages and high temperatures is improved.

In some embodiments of this application, an output voltage of the secondary battery is greater than or equal to 4.48 V and less than or equal to 4.6 V. In some embodiments of this application, the output voltage of the secondary battery is less than or equal to 4.56 V. When the output voltage of the secondary battery is within the above range, the secondary battery has a high energy density; and with the separator, the electrolyte nitrile-containing additive, and the positive electrode nitrile-containing additive of this application, the self-discharge issue of the secondary battery during charging and discharging can be alleviated.

This application has no particular limitation on the method of controlling the output voltage of the secondary battery, provided that the objective of this application can be achieved. The output voltage of the secondary battery can be adjusted by adjusting the positive and negative electrode materials, electrolyte, and the like. For example, the output voltage of the secondary battery is adjusted by controlling the doping and/or coating of lithium cobaltate as the positive electrode active material or by controlling the type of the positive electrode active material. For example, lithium cobaltate can be doped and/or with elements such as Mg, Al, and Ti to increase the output voltage. These materials can be purchased on the market.

Further, 0.035D²-0.562D+2.253≤y≤0.027D²-0.482D+2.257. Controlling the relationship between the thickness of the base film and the mass percentage of the positive electrode nitrile-containing additive facilitates a synergistic effect between the base film and the positive electrode nitrile-containing additive, reducing the dissolution of transition metal ions (for example, Co ions) inside the secondary battery and controlling diffusion impedance, thereby alleviating the self-discharge issue of the secondary battery during charging and discharging. As a result, the consistency in the voltages and capacities of the secondary batteries in the secondary battery module is improved, the series voltage difference issue of the secondary battery module during charging and discharging is alleviated, and the cycling performance of the secondary battery under high voltages and high temperatures is improved.

In some embodiments of this application, a material of the base film includes a polyolefin, and the polyolefin includes at least one of polyethylene (PE) or polypropylene (PP).

In some embodiments of this application, the base film is a multilayer film structure. This application has no particular limitation on the number of film layers in the multilayer film structure, provided that the objective of this application can be achieved. In some embodiments, the multilayer film structure of the base film includes at least two film layers, for example, 2 or 3 layers. When the base film is the multilayer film structure, combining different types of materials selected can leverage the respective characteristics of the different types of materials. For example, the base film includes but is not limited to PP/PE/PP or PP/PE.

This application has no particular limitation on the porosity of the base film, provided that the objective of this application can be achieved. For example, the porosity of the base film is 25% to 60%.

In some embodiments of this application, to enhance the strength, insulation performance, and hindrance to the shuttling of transition metal elements of the separator, the separator further includes an insulating layer disposed on a surface of the base film, and the insulating layer is disposed on at least one surface of the base film along its thickness direction. It can be understood that in some embodiments of this application, the insulating layer is disposed on one surface of the base film along its thickness direction. In some other embodiments of this application, the insulating layer is disposed on both surfaces of the base film along its thickness direction. The insulating layer includes inorganic particles and a binder. This application has no particular limitation on the type of the inorganic particles, provided that the objective of this application can be achieved. For example, the inorganic particles include one or more selected from the group consisting of alumina, silica, magnesia, titania, hafnia, tin oxide, ceria, nickel oxide, zinc oxide, calcium oxide, zirconia, yttria, silicon carbide, boehmite, aluminum hydroxide, magnesium hydroxide, calcium hydroxide, and barium sulfate. This application has no particular limitation on the type of the binder, provided that the objective of this application can be achieved. For example, the binder includes one or more selected from the group consisting of styrene-butadiene rubber, polyacrylic acid, polyvinyl alcohol, polyethylene glycol, polyacrylate, polyvinylidene fluoride, polyvinyl chloride, formaldehyde resin, and nitrile acrylate.

This application has no particular limitation on the average volume particle size of the above inorganic particles, and persons skilled in the art can select according to actual needs, provided that the objective of this application can be achieved.

This application has no particular limitation on the thickness of the insulating layer, provided that the objective of this application can be achieved. For example, the thickness of the insulating layer is 0.2 µm to 3 µm.

In some embodiments of this application, the positive electrode active material includes one or more selected from the group consisting of lithium cobaltate, lithium nickel cobalt manganate, lithium nickel cobalt aluminate, lithium manganate, lithium iron phosphate, and lithium manganese iron phosphate. Selecting the above types of positive electrode active materials allows the secondary battery to have a high capacity.

This application has no particular limitation on the type of the positive electrode current collector, provided that the objective of this application can be achieved. For example, the positive electrode current collector may include an aluminum foil, an aluminum alloy foil, and the like. In this application, the positive electrode active material may further include a non-metal element. For example, the non-metal element includes one or more selected from the group consisting of fluorine, phosphorus, boron, chlorine, silicon, and sulfur. These elements can further improve the stability of the positive electrode active material. In this application, there is no particular limitation on the thicknesses of the positive electrode current collector and the positive electrode active material layer, provided that the objective of this application can be achieved. For example, the thickness of the positive electrode current collector is 5 µm to 20 µm, preferably 6 µm to 18 µm. The thickness of the positive electrode active material layer is 30 µm to 120 µm.

Optionally, the positive electrode active material layer may further include a positive electrode conductive agent and a positive electrode binder. This application has no particular limitation on the types of the positive electrode conductive agent and the positive electrode binder in the positive electrode active material layer, provided that the objective of this application can be achieved. This application has no particular limitation on a mass ratio of the positive electrode active material, the positive electrode conductive agent, and the positive electrode binder in the positive electrode active material layer, and persons skilled in the art can select according to actual needs, provided that the objective of this application can be achieved. For example, the mass ratio of the positive electrode active material, the positive electrode nitrile-containing additive, the positive electrode conductive agent, and the positive electrode binder in the positive electrode active material layer is (90.00to 99.00):(0.001to 1):(0.495to 4.75):(0.495 to 4.75).

This application has no particular limitation on the negative electrode plate, provided that the objective of this application can be achieved. For example, the negative electrode plate includes a negative electrode current collector and a negative electrode active material layer. This application has no particular limitation on the negative electrode current collector, provided that the objective of this application can be achieved. For example, the negative electrode current collector may include a copper foil, a copper alloy foil, a nickel foil, a stainless steel foil, a titanium foil, nickel foam, copper foam, and the like. The negative electrode active material layer of this application includes a negative electrode active material. This application has no particular limitation on the type of negative electrode active material, provided that the objective of this application can be achieved. For example, the negative electrode active material may include one or more selected from the group consisting of natural graphite, artificial graphite, mesocarbon microbeads (MCMB), hard carbon, soft carbon, silicon, silicon-carbon composite, SiOₓ (0<x<2), Li-Sn alloy, Li-Sn-O alloy, Sn, SnO, SnO₂, lithium titanate Li₄Ti₅O₁₂ with a spinel structure, Li-Al alloy, and metallic lithium. This application has no particular limitation on the thicknesses of the negative electrode current collector and the negative electrode active material layer, provided that the objective of this application can be achieved. For example, the thickness of the negative electrode current collector is 6 µm to 10 µm, and the thickness of the negative electrode active material layer is 30 µm to 130 µm. Optionally, the negative electrode active material layer may further include one or more selected from the group consisting of a negative electrode conductive agent, a thickener, or a negative electrode binder. This application has no particular limitation on the types of the negative electrode conductive agent, the stabilizer, and the negative electrode binder in the negative electrode active material layer, provided that the objective of this application can be achieved. This application has no particular limitation on a mass ratio of the negative electrode active material, the negative electrode conductive agent, the thickener, and the negative electrode binder in the negative electrode active material layer, provided that the objective of this application can be achieved. For example, the mass ratio of the negative electrode active material, the negative electrode conductive agent, the thickener, and the negative electrode binder in the negative electrode active material layer is (97 to 98):(0.5 to 1.5):(0.5 to 1.5):(1.0 to 1.9).

The electrolyte of this application further includes a lithium salt and a non-aqueous solvent. The lithium salt may include one or more selected from the group consisting of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), and lithium difluoro(oxalato)borate. This application has no particular limitation on the non-aqueous solvent, provided that the objective of this application can be achieved. For example, the non-aqueous solvent may include but is not limited to one or more selected from the group consisting of a carbonate compound, a carboxylate compound, an ether compound, and another organic solvent. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate compound may include but is not limited to at least one of ethylene carbonate (EC), propylene carbonate (also referred to as propene carbonate, PC for short), butylene carbonate (BC), or vinyl ethylene carbonate (VEC). The fluorocarbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include but is not limited to at least one of methyl formate, methyl acetate, ethyl acetate, n-propyl acetate, tert-butyl acetate, methyl propionate, ethyl propionate, propyl propionate, γ-butyrolactone, decalactone, valerolactone, or caprolactone. The ether compound may include but is not limited to at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The another organic solvent may include but is not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. This application has no particular limitation on the amounts of the lithium salt and the non-aqueous solvent in the electrolyte, provided that the objective of this application can be achieved.

The secondary battery of this application further includes a packaging bag, and the electrolyte and the electrode assembly are accommodated in the packaging bag. This application has no particular limitation on the packaging bag, and the packaging bag may be a packaging bag known in the art, provided that the objective of this application can be achieved.

This application has no particular limitation on the type of the secondary battery, and the secondary battery may include any device undergoing an electrochemical reaction. For example, the secondary battery may include but is not limited to a lithium metal secondary battery, a lithium-ion secondary battery (a lithium-ion battery), a sodium-ion secondary battery (a sodium-ion battery), a lithium polymer secondary battery, and a lithium-ion polymer secondary battery.

According to a second aspect of this application, an electronic device is provided, including the secondary battery according to any one of the foregoing embodiments. Therefore, the electronic device has good cycling performance.

The electronic device of this application is not particularly limited and may be any electronic device known in the prior art. For example, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal display television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, and a lithium-ion capacitor.

### Examples

The following describes some embodiments of this application more specifically by using examples and comparative examples. Various tests and evaluations were conducted according to the methods described below.

### Test methods and equipment:

### Test method for base film thickness D:

A scanning electron microscope (SEM) was used to test SEM images of a cross-section of the separator in each example or comparative examples. The thickness of the base film was measured in the SEM images, five points were randomly selected in each image, and an average of the thicknesses measured at the five points was calculated as the thickness D of the base film.

### Test method for output voltage:

(1) The lithium-ion battery in each example and comparative example was fully discharged first. The discharge process was as follows: the lithium-ion battery was discharged to 3.0 V at a constant current of 0.2C, left standing for 30 min, and discharged to 3.0 V at a constant current of 0.2C (C represented an operating capacity of the lithium-ion battery).
(2) The lithium-ion battery was charged at a current of 0.05C for 20 h, and a voltage V at this point was recorded as an output voltage.

### Test method for mass percentage x% of electrolyte nitrile-containing additive:

A top seal of the lithium-ion battery was cut open, and the lithium-ion battery was placed upside down in a centrifuge tube. The electrolyte was centrifuged out using a centrifuge. The lithium-ion battery was disassembled to obtain a positive electrode plate, and a mass M₁ (g) of the positive electrode plate was weighed.

The centrifuged electrolyte was gradually diluted to different gradients in a container with a fixed volume V₁ (mL), with a concentration range of 0.1 mg/L to 10 mg/L (a ratio of two adjacent concentrations was high concentration:low concentration=V₁:1). A gas chromatograph-mass spectrometer was used to test a concentration n₁ mg/mL in a sample under test, and a percentage of the electrolyte nitrile-containing additive was calculated as x=n₁×V₁/M₁.

### Test method for mass percentage y% of positive electrode nitrile-containing additive:

The lithium-ion battery was disassembled to obtain a positive electrode plate, and a sample with a size of 2 cm×2 cm was cut out, where a is an integer, and a mass M₂ (g) of the sample was weighed. The sample was washed three times with dimethyl carbonate (DMC) to remove free lithium salts on a surface and soluble components in a solid electrolyte interface (SEI) film. The sample was placed in N-methylpyrrolidone and stirred for 5 h. The resulting solution was filtered, and a supernatant was taken. The supernatant was separated by chromatography to obtain a dilute solution of a pure-phase positive electrode nitrile-containing additive.

The dilute solution of the pure-phase positive electrode nitrile-containing additive was gradually diluted to different gradients in a container with a fixed volume V₂ (mL), with a concentration range of 0.1 mg/L to 10 mg/L (a ratio of two adjacent concentrations was high concentration:low concentration=V₁:1). A gas chromatograph-mass spectrometer was used to test a concentration n₂ mg/mL of a sample under test, and the percentage of the positive electrode nitrile-containing additive was calculated as y=n₂×V₂/M₂.

### Test method for ratio m₁ of the number of carbon atoms to the number of nitrogen atoms:

An inductively coupled plasma (ICP) spectrometer was used to test the ratio m₁ of the number of carbon atoms to the number of nitrogen atoms.

### Detection method for ratio m₂ of the number of carbon atoms to the number of nitrogen atoms:

A typical elemental analysis method was used to test a molar ratio of carbon (C) to nitrogen (N) in the nitrile-containing polymer as m₂.

### Test method for weight-average molecular weight M_{w}:

A laser light scattering instrument was used to test the weight-average molecular weight M_{w}.

### Test method for cycling performance:

The lithium-ion battery in each example and comparative example was placed in a constant-temperature chamber at 45°C and left standing for 30 minutes, such that the lithium-ion battery reached a constant temperature. The lithium-ion battery that reached the constant temperature was charged to 4.2 V under 45°C at a constant current of 1C, then charged to 0.05C at a constant voltage of 4.2 V, left standing for 5 minutes, and then discharged to 3.0 V at a constant current of 0.7C. This was one charge-discharge cycle. The lithium-ion battery was charged/discharged in this manner. A capacity retention rate after 100 cycles of the lithium-ion battery was calculated. During the test, after every 50 cycles, the lithium-ion battery undergone one low-rate charge-discharge cycle to calibrate the discharge condition of the lithium-ion battery. Parameters of the low-rate charge-discharge cycle were the same as those of the above charge-discharge cycle, except that the lithium-ion battery was discharged at a constant current.

A capacity retention rate of the lithium-ion battery after cycling was calculated using the following formula: capacity retention rate=discharge capacity of the 100th cycle/initial discharge capacity×100%. The capacity retention rate of the lithium-ion battery was measured through three sets of parallel experiments, and an average of the three sets of parallel experiment data was taken as the capacity retention rate of the lithium-ion battery.

### Test method for maximum cycling voltage difference:

### Preparation of lithium-ion battery module:

Four lithium-ion batteries in each example or comparative example were taken and connected in series to obtain a lithium-ion battery module.

At the end of charging during cycling of the lithium-ion battery module in each example and comparative example, a voltage difference (V1-V2) between a voltage V1 of a lithium-ion battery with the highest voltage and a voltage V2 of a lithium-ion battery with the lowest voltage was monitored and recorded as a maximum cycling voltage difference.

### Example 1-1

### <Preparation of positive electrode plate>

A positive electrode active material lithium cobaltate, conductive agent conductive carbon black (Super P), a positive electrode nitrile-containing additive polyacrylonitrile (where m₂=3 and M_{w}=300000), and a binder polyvinylidene fluoride (PVDF for short, with a weight-average molecular weight of 800000 to 1200000) were mixed at a mass ratio of 94.43:2:1:2.57, and N-methylpyrrolidone (NMP) was added as a solvent. The resulting mixture was stirred in a vacuum mixer until to obtain a uniform positive electrode slurry with a solid content of 70wt%. The positive electrode slurry was uniformly applied on one surface of a positive electrode current collector aluminum foil with a thickness of 12 µm at a coating mass of 97.38 g/m² and dried at 120°C for 1 h to obtain a positive electrode plate having one surface coated with a positive electrode active material layer (with a thickness of 110 µm). Then, the above steps were repeated on the other surface of the aluminum foil to obtain a positive electrode plate having both surfaces each coated with the positive electrode active material layer. The positive electrode plate was then cold-pressed, cut, and welded with tabs to obtain a positive electrode plate with dimensions of 74 mm×867 mm.

### <Preparation of negative electrode plate>

A negative electrode active material artificial graphite, a conductive agent Super P, a binder polyacrylic acid (with a weight-average molecular weight of 5000000 to 14000000), and a thickener sodium carboxymethyl cellulose (with a weight-average molecular weight of 10000000 to 15000000) were mixed at a mass ratio of 83.5:10:5:1.5, and deionized water was added as a solvent. The resulting mixture was stirred in a vacuum mixer to obtain a uniform negative electrode slurry with a solid content of 75wt%.

Polyacrylic acid (with a weight-average molecular weight of 8000000) and a conductive agent Super P were mixed at a mass ratio of 50:50, and deionized water was added as a solvent. The resulting mixture was stirred in a vacuum mixer to obtain a uniform primer coating slurry until a solid content of 75wt%.

The primer coating slurry was first applied on one surface of a negative electrode current collector copper foil with a thickness of 12 µm and dried at 120°C to obtain a negative electrode plate having one surface coated with a primer coating with a thickness of 30 µm. Then, the above steps were repeated on the other surface of the copper foil to obtain a negative electrode plate having both surfaces each coated with the primer coating. The negative electrode slurry was then applied on one surface of the copper foil with the primer coating and dried at 120°C to obtain a negative electrode plate having one surface coated with a negative electrode active material layer with a thickness of 130 µm. The above steps were repeated on the other surface of the copper foil with the primer coating to obtain a negative electrode plate having both surfaces each coated with the negative electrode active material layer. The negative electrode plate was cold-pressed, cut, and welded with tabs to obtain a negative electrode plate with dimensions of 76 mm×851 mm for use.

### <Preparation of electrolyte>

In a dry argon atmosphere, ethylene carbonate (EC), propylene carbonate (PC), and diethyl carbonate (DEC) were mixed at a mass ratio of 1:1:1 to obtain a base organic solvent. Lithium hexafluorophosphate (LiPF₆) was added to the base organic solvent, dissolved, and mixed well, followed by the addition of an electrolyte nitrile-containing additive malononitrile to obtain an electrolyte. Based on a mass of the electrolyte, a mass percentage of LiPF₆ was 12.5%, a mass percentage of malononitrile was x=2.3%, and the remainder was the base organic solvent.

### <Separator>

A polyethylene base film with a thickness of 4 µm (manufacturer: Zhuo Gao Advanced Materials Technology Co., Ltd.) was used as a separator.

### <Preparation of lithium-ion battery>

The prepared negative electrode plate, separator, and positive electrode plate were stacked sequentially and then wound to obtain an electrode assembly with a wound structure. The electrode assembly was placed in an aluminum-plastic film packaging bag, dried, injected with the electrolyte, and subjected to processes such as vacuum sealing, standing, formation, degassing, and trimming to obtain a lithium-ion battery. The formation condition was as follows: the lithium-ion battery was charged to 3.3 V at a constant current of 0.02C and then charged to 4.5 V at a constant current of 0.1C.

### Examples 1-2 to 1-14

These examples were the same as Example 1-1 except that the related preparation parameters were adjusted according to Table 1.

In the <preparation of positive electrode plate>, the mass percentage of the positive electrode nitrile-containing additive was changed, the mass percentage of the positive electrode active material was adjusted accordingly, the other components remained unchanged, and the total mass percentage of the positive electrode active material, conductive agent, positive electrode nitrile-containing additive, and binder was 100%.

In the <preparation of electrolyte>, the mass percentage of the electrolyte nitrile-containing additive was changed, the mass percentage of the base organic solvent was adjusted accordingly, the other components remained unchanged, and the total mass percentage of the electrolyte nitrile-containing additive, base organic solvent, and lithium salt was 100%.

### Example 1-15

This example was the same as Example 1-4 except that in the <preparation of positive electrode plate>, zinc oxide-coated lithium cobaltate was used as the positive electrode active material (where the mass of zinc oxide was 1wt% of the positive electrode active material), and the output voltage of the secondary battery was adjusted to 4.5 V.

### Example 1-16

This example was the same as Example 1-4 except that in the <preparation of positive electrode plate>, lithium cobaltate doped with Mg, Al, and Ti was used as the positive electrode active material (where the mass of each of Mg, Al, and Ti was 0.1wt% of the positive electrode active material), and the output voltage of the secondary battery was adjusted to 4.56 V.

### Example 1-17

This example was the same as Example 1-4 except that in the <preparation of positive electrode plate>, Mg-doped and Se-coated lithium cobaltate was used as the positive electrode active material (where the molar amount of Mg was 1 mol% of the positive electrode active material, and the mass of Se was 0.2wt% of the positive electrode active material), and the output voltage of the secondary battery was adjusted to 4.6 V.

### Examples 1-18 to 1-26

These examples were the same as Example 1-1 except that the related preparation parameters were adjusted according to Table 1.

In the <preparation of positive electrode plate>, the mass percentage of the positive electrode nitrile-containing additive was changed, the mass percentage of the positive electrode active material was adjusted accordingly, the other components remained unchanged, and the total mass percentage of the positive electrode active material, conductive agent, positive electrode nitrile-containing additive, and binder was 100%.

In the <preparation of electrolyte>, the mass percentage of the electrolyte nitrile-containing additive was changed, the mass percentage of the base organic solvent was adjusted accordingly, the other components remained unchanged, and the total mass percentage of the electrolyte nitrile-containing additive, base organic solvent, and lithium salt was 100%.

### Examples 2-1 to 2-6

These examples were the same as Example 1-4 except that the related preparation parameters were adjusted according to Table 2.

### Comparative Examples 1 to 7

These examples were the same as Example 1-1 except that the related preparation parameters were adjusted according to Table 1.

In the <preparation of positive electrode plate>, the mass percentage of the positive electrode nitrile-containing additive was changed, the mass percentage of the positive electrode active material was adjusted accordingly, the other components remained unchanged, and the total mass percentage of the positive electrode active material, conductive agent, positive electrode nitrile-containing additive, and binder was 100%.

In the <preparation of electrolyte>, the mass percentage of the electrolyte nitrile-containing additive was changed, the mass percentage of the base organic solvent was adjusted accordingly, the other components remained unchanged, and the total mass percentage of the electrolyte nitrile-containing additive, base organic solvent, and lithium salt was 100%.

Preparation parameters and performance parameters of examples and comparative examples are shown in Table 1 and Table 2.

**Table 1**

| | Output voltage (V) | Base film thickness D (µm) | x (%) | 0.035D²-0.562D+ 2.253 | y (%) | 0.027D² - 0.482D+ 2.257 | z (%) | Cycling capacity retention rate at 45°C (%) | Maximum cycling voltage difference at 45°C (mV) |
|---|---|---|---|---|---|---|---|---|---|
| Example 1-1 | 4.48 | 4 | 2.3 | 0.565 | 1.0 | 0.761 | 3.3 | 97 | 120 |
| Example 1-2 | 4.48 | 4 | 1.9 | 0.565 | 0.8 | 0.761 | 2.7 | 97 | 100 |
| Example 1-3 | 4.48 | 4 | 1.7 | 0.565 | 0.6 | 0.761 | 2.3 | 98 | 50 |
| Example 1-4 | 4.48 | 4 | 1.4 | 0.565 | 0.6 | 0.761 | 2.0 | 98 | 60 |
| Example 1-5 | 4.48 | 4 | 1.0 | 0.565 | 0.7 | 0.761 | 1.7 | 97 | 80 |
| Example 1-6 | 4.48 | 4 | 0.9 | 0.565 | 0.5 | 0.761 | 1.4 | 95 | 200 |
| Example 1-7 | 4.48 | 4 | 0.6 | 0.565 | 0.4 | 0.761 | 1.0 | 89 | 240 |
| Example 1-8 | 4.48 | 4 | 0.4 | 0.565 | 0.2 | 0.761 | 0.6 | 86 | 290 |
| Example 1-9 | 4.48 | 4 | 0.15 | 0.565 | 0.15 | 0.761 | 0.3 | 84 | 300 |
| Example 1-10 | 4.48 | 4 | 1.4 | 0.565 | 0.8 | 0.761 | 2.2 | 93 | 150 |
| Example 1-11 | 4.48 | 4 | 1.4 | 0.565 | 0.75 | 0.761 | 2.15 | 95 | 70 |
| Example 1-12 | 4.48 | 4 | 1.4 | 0.565 | 0.7 | 0.761 | 2.1 | 98 | 60 |
| Example 1-13 | 4.48 | 4 | 1.4 | 0.565 | 0.55 | 0.761 | 1.95 | 95 | 90 |
| Example 1-14 | 4.48 | 4 | 1.4 | 0.565 | 0.5 | 0.761 | 1.9 | 92 | 150 |
| Example 1-15 | 4.5 | 4 | 1.4 | 0.565 | 0.6 | 0.761 | 2.0 | 95 | 75 |
| Example 1-16 | 4.56 | 4 | 1.4 | 0.565 | 0.6 | 0.761 | 2.0 | 92 | 100 |
| Example 1-17 | 4.6 | 4 | 1.4 | 0.565 | 0.6 | 0.761 | 2.0 | 87 | 300 |
| Example 1-18 | 4.48 | 7 | 1.0 | 0.034 | 0.2 | 0.206 | 1.5 | 97.5 | 45 |
| Example 1-19 | 4.48 | 7 | 1.0 | 0.034 | 0.4 | 0.206 | 2.0 | 91 | 150 |
| Example 1-20 | 4.48 | 7 | 1.0 | 0.034 | 0.25 | 0.206 | 1.25 | 89 | 170 |
| Example 1-21 | 4.48 | 7 | 1.0 | 0.034 | 0.1 | 0.206 | 1.1 | 97 | 65 |
| Example 1-22 | 4.48 | 7 | 1.0 | 0.034 | 0.05 | 0.206 | 1.05 | 95 | 80 |
| Example 1-23 | 4.48 | 3 | 1.0 | 0.882 | 1.0 | 1.054 | 2.0 | 95 | 70 |
| Example 1-24 | 4.48 | 3 | 1.0 | 0.882 | 0.5 | 1.054 | 1.5 | 87 | 150 |
| Example 1-25 | 4.48 | 3 | 1.0 | 0.882 | 0.9 | 1.054 | 1.9 | 94 | 80 |
| Example 1-26 | 4.48 | 3 | 1.0 | 0.882 | 0.8 | 1.054 | 1.8 | 89 | 120 |
| Comparative Example 1 | 4.48 | 4 | \ | 0.565 | \ | 0.761 | \ | 60 | 800 |
| Comparative Example 2 | 4.48 | 4 | 0.1 | 0.565 | 0.1 | 0.761 | 0.2 | 75 | 710 |
| Comparative Example 3 | 4.48 | 4 | 1.5 | 0.565 | 1.1 | 0.761 | 2.6 | 80 | 560 |
| Comparative Example 4 | 4.48 | 4 | 2.4 | 0.565 | 1.1 | 0.761 | 3.5 | 78 | 540 |
| Comparative Example 5 | 4.48 | 4 | 2.4 | 0.565 | 0.5 | 0.761 | 2.0 | 79 | 500 |
| Comparative Example 6 | 4.48 | 4 | 0 | 0.565 | 0.5 | 0.761 | 0.5 | 74 | 530 |
| Comparative Example 7 | 4.48 | 4 | 1.5 | 0.565 | 0 | 0.761 | 1.5 | 79 | 600 |

| | | | | | | | | | |
|---|---|---|---|---|---|---|---|---|---|
| Note: "\" in Table 1 means that there is no related preparation parameter. | | | | | | | | | |

From Examples 1-1 to 1-26 and Comparative Examples 1 to 7, it can be seen that when the output voltage and the base film thickness of the separator in the secondary battery are within the ranges of this application, the secondary battery in each example has a higher cycling capacity retention rate at 45°C and a lower maximum cycling voltage difference ay 45°C by increasing the output voltage, using the separator with the thin base film, introducing the electrolyte nitrile-containing additive and the positive electrode nitrile-containing additive, and controlling the mass percentage of the electrolyte nitrile-containing additive, the mass percentage of the positive electrode nitrile-containing additive, and the total mass percentage of the electrolyte nitrile-containing additive and the positive electrode nitrile-containing additive within the ranges of this application. This indicates that the self-discharge issue of the secondary battery during charging and discharging is alleviated, the consistency in the voltages and capacities of the secondary batteries in the secondary battery module is improved, the series voltage difference in the secondary battery module is smaller, the series voltage difference issue of the secondary battery module during charging and discharging is alleviated, and the cycling performance of the secondary battery under high voltages and high temperatures is improved. In contrast, when the secondary battery in the comparative example does not include the positive electrode nitrile-containing additive or the electrolyte nitrile-containing additive, or when at least one of x, y, or z does not fall within the range of this application, the secondary battery has a lower cycling capacity retention rate at 45°C and a higher maximum cycling voltage difference at 45°C. This indicates that the self-discharge issue of the secondary battery during charging and discharging is significant, the consistency in the voltages and capacities of the secondary batteries in the secondary battery module is lower, and the series voltage difference in the secondary battery module is higher.

From Examples 1-4 and Examples 1-15 to 1-17, it can be seen that when the output voltage of the secondary battery of this application is within the range of this application, the secondary battery has a higher cycling capacity retention rate at 45°C and a lower maximum cycling voltage difference at 45°C. This indicates that the self-discharge issue of the secondary battery during charging and discharging is alleviated, the consistency in the voltages and capacities of the secondary batteries in the secondary battery module is improved, the series voltage difference issue of the secondary battery module during charging and discharging is alleviated, and the secondary battery has good cycling performance under high voltages and high temperatures.

When the mass percentage y of the positive electrode nitrile-containing additive satisfies: 0.035D²-0.562D+2.253≤y≤0.027D²-0.482D+2.257, the self-discharge issue of the secondary battery during charging and discharging under high output voltages and high temperatures can be further alleviated. From Examples 1-1 to 1-14 and Examples 1-18 to 1-26, it can be seen that when the mass percentage y of the positive electrode nitrile-containing additive satisfies: 0.035D²-0.562D+2.253≤y≤0.027D²-0.482D+2.257, the secondary battery has a higher cycling capacity retention rate at 45°C and a lower maximum cycling voltage difference at 45°C. This indicates that the self-discharge issue of the secondary battery during charging and discharging is alleviated, the consistency in the voltages and capacities of the secondary batteries in the secondary battery module is improved, the series voltage difference in the secondary battery module is smaller, the series voltage difference issue of the secondary battery module during charging and discharging is alleviated, and the cycling performance of the secondary battery under high voltages and high temperatures is further improved.

**Table 2**

| | Output voltage (V) | Base film thickness D (µm) | Electrolyte nitrile-containing additive | m₁ | Positive electrode nitrile-containing additive | m₂ | M_{w} | Cycling capacity retention rate at 45°C (%) | Maximum cycling voltage difference at 45°C (mV) |
|---|---|---|---|---|---|---|---|---|---|
| Example 1-4 | 4.48 | 4 | Malononitrile | 3/2 | Polyacrylonitrile | 3 | 300000 | 98 | 60 |
| Example 2-1 | 4.48 | 4 | Succinonitrile | 2 | Polyacrylonitrile | 3 | 300000 | 97 | 65 |
| Example 2-2 | 4.48 | 4 | Sebaconitrile | 5 | Polyacrylonitrile | 3 | 300000 | 96 | 63 |
| Example 2-3 | 4.48 | 4 | Malononitrile | 3/2 | Polybutenenitrile | 4 | 300000 | 97 | 65 |
| Example 2-4 | 4.48 | 4 | Malononitrile | 3/2 | Polypentenenitrile | 5 | 300000 | 96 | 65 |
| Example 2-5 | 4.48 | 4 | Malononitrile | 3/2 | Polyacrylonitrile | 3 | 300 | 95 | 70 |
| Example 2-6 | 4.48 | 4 | Malononitrile | 3/2 | Polyacrylonitrile | 3 | 700000 | 96 | 65 |

The type of the electrolyte nitrile-containing additive typically affects the cycling performance of the secondary battery. From Examples 1-4, 2-1, and 2-2, it can be seen that secondary battery using the electrolyte nitrile-containing additive within the range of this application has a high cycling capacity retention rate at 45°C, and a module formed by the secondary battery has a low maximum cycling voltage difference at 45°C. This indicates that the self-discharge issue of the secondary battery during charging and discharging is alleviated, the consistency in the voltages and capacities of the secondary batteries in the secondary battery module is improved, the series voltage difference issue of the secondary battery module during charging and discharging is alleviated, and the secondary battery has good cycling performance under high voltages and high temperatures.

The type of the positive electrode nitrile-containing additive typically affects the cycling performance of the secondary battery. From Examples 1-4, 2-3, and 2-4, it can be seen that when the ratio of the number of carbon atoms to the number of nitrogen atoms in the positive electrode nitrile-containing additive changes, the type of the positive electrode nitrile-containing additive changes accordingly. The secondary battery using the positive electrode nitrile-containing additive within the range of this application has a high cycling capacity retention rate at 45°C, and a secondary battery module formed by the secondary battery has a low maximum cycling voltage difference at 45°C. This indicates that the self-discharge issue of the secondary battery during charging and discharging is alleviated, the consistency in the voltages and capacities of the secondary batteries in the secondary battery module is improved, the series voltage difference issue of the secondary battery module during charging and discharging is alleviated, and the secondary battery has good cycling performance under high voltages and high temperatures.

The weight-average molecular weight of the positive electrode nitrile-containing additive typically affects the cycling performance of the secondary battery. From Examples 1-4, 2-5, and 2-6, it can be seen that the secondary battery using the positive electrode nitrile-containing additive with a weight-average molecular weight within the range of this application has a high cycling capacity retention rate at 45°C, and a secondary battery module formed by the secondary battery has a low maximum cycling voltage difference at 45°C. This indicates that the self-discharge issue of the secondary battery during charging and discharging is alleviated, the consistency in the voltages and capacities of the secondary batteries in the secondary battery module is improved, the series voltage difference issue of the secondary battery module during charging and discharging is alleviated, and the secondary battery has good cycling performance under high voltages and high temperatures.

It should be noted that in this specification, the terms "include", "comprise", or any of their variants are intended to cover a non-exclusive inclusion, such that a process, a method, an article, or equipment that includes a list of elements not only includes those elements but also includes other elements that are not expressly listed, or further includes elements inherent to such process, method, article, or equipment.

Various embodiments in this specification are described in related manners, provided that same or similar parts of various embodiments are referred to each other. Each embodiment focuses on the difference from another embodiment.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. A secondary battery, comprising an electrode assembly and an electrolyte; wherein the electrode assembly comprises a positive electrode plate, a negative electrode plate, and a separator; the separator is disposed between the positive electrode plate and the negative electrode plate; the positive electrode plate comprises a positive electrode current collector and a positive electrode active material layer disposed on at least one surface of the positive electrode current collector; the positive electrode active material layer comprises a positive electrode active material; the positive electrode active material comprises a transition metal element; the transition metal element comprises one or more selected from the group consisting of Co, Ni, Mn, Fe, and V;
the separator comprises a base film, wherein a thickness of the base film is D µm, 3≤D≤7; and
the secondary battery comprises an electrolyte nitrile-containing additive and a positive electrode nitrile-containing additive; wherein based on a mass of the electrolyte, a mass percentage of the electrolyte nitrile-containing additive is x%; and based on a mass of the positive electrode active material layer, a mass percentage of the positive electrode nitrile-containing additive is y%; wherein x+y=z, 0.3≤z≤3.3, 0<x≤2.3, and 0<y≤1.

2. The secondary battery according to claim 1, wherein, 1.4≤z≤3.3.

3. The secondary battery according to claim 1, wherein, a ratio of the number of carbon atoms to the number of nitrogen atoms in the electrolyte nitrile-containing additive is m₁, 1≤m₁≤6; and the electrolyte nitrile-containing additive comprises one or more selected from the group consisting of malononitrile, succinonitrile, glutaronitrile, adiponitrile, pimelonitrile, suberonitrile, sebaconitrile, 3,3'-oxydipropionitrile, hex-2-enedinitrile, trans-butenedinitrile, 2-pentenedinitrile, methylglutaronitrile, 4-cyanopimelonitrile, (Z)-but-2-enedinitrile, 2,2,3,3-tetrafluorosuccinonitrile, ethylene glycol bis(propionitrile) ether, 1,3,5-pentanetricarbonitrile, 1,3,6-hexanetricarbonitrile, 1,2,6-hexanetricarbonitrile, 1,2,3-tris(2-cyanoethoxy)propane, and 1,1,3,3-propanetetracarbonitrile.

4. The secondary battery according to claim 1, wherein, the positive electrode nitrile-containing additive is a nitrile-containing polymer, a ratio of the number of carbon atoms to the number of nitrogen atoms in the positive electrode nitrile-containing additive is m₂, 3≤m₂≤5; a weight-average molecular weight of the positive electrode nitrile-containing additive is M_{w}, and 300≤M_{w}≤700000.

5. The secondary battery according to claim 4, wherein, the positive electrode nitrile-containing additive comprises one or more selected from the group consisting of polyacrylonitrile, polybutenenitrile, and polyisobutenenitrile.

6. The secondary battery according to claim 1, wherein, an output voltage of the secondary battery is greater than or equal to 4.48 V and less than or equal to 4.6 V.

7. The secondary battery according to claim 6, wherein, the output voltage of the secondary battery is less than or equal to 4.56 V.

8. The secondary battery according to claim 1, wherein, 0.035D²-0.562D+2.253≤y≤0.027D²-0.482D+2.257.

9. The secondary battery according to claim 1, wherein, a material of the base film comprises a polyolefin, and the polyolefin comprises at least one of polyethylene or polypropylene.

10. The secondary battery according to claim 9, wherein, the separator further comprises an insulating layer disposed on a surface of the base film, and the insulating layer comprises inorganic particles and a binder; wherein,
the inorganic particles comprise one or more selected from the group consisting of alumina, silica, magnesia, titania, hafnia, tin oxide, ceria, nickel oxide, zinc oxide, calcium oxide, zirconia, yttria, silicon carbide, boehmite, aluminum hydroxide, magnesium hydroxide, calcium hydroxide, and barium sulfate; and
the binder comprises one or more selected from the group consisting of styrene-butadiene rubber, polyacrylic acid, polyvinyl alcohol, polyethylene glycol, polyacrylate, polyvinylidene fluoride, polyvinyl chloride, formaldehyde resin, and nitrile acrylate.

11. The secondary battery according to claim 9, wherein, the base film is a multilayer film structure.

12. The secondary battery according to claim 1, wherein, the positive electrode active material comprises one or more selected from the group consisting of lithium cobaltate, lithium nickel cobalt manganate, lithium nickel cobalt aluminate, lithium manganate, lithium iron phosphate, and lithium manganese iron phosphate.

13. An electronic device, comprising the secondary battery according to any one of claims 1 to 12.
